# DEMANDE DE BREVET EUROPEEN

(11) **EP 4 559 822 A1**
(43) Date de publication de la demande: **28.05.2025**
(21) Numéro de dépôt: 24214087.9
(22) Date de dépôt: 20.11.2024
(51) Int. Cl.: B65B 5/08, B25J 15/06, B65B 35/18, B65B 35/38, B65B 35/58, B65B 59/00, B65B 59/04, B65B 19/34, B65B 35/16, B65B 35/36, A22C 11/00

(54) **DISPOSITIF DE PRÉHENSEUR-COURBEUR ET D'ENSEMBLE PRÉHENSEUR MODULAIRE**

(30) Priorité: 24.11.2023 FR 2312996
(71) Demandeur: Velec Systems, 59150 Wattrelos (FR)
(72) Inventeur: MASUREL, Maxence, 59290 WASQUEHAL (FR); SIX, Pierre, 59400 NIERGNIES (FR)
(74) Mandataire: Plasseraud IP

(57) **Abrégé**

Procédé mécanisé de courbement et de chargement de produits (O) longilignes présentant deux extrémités longitudinales dans au moins un emballage (E) mettant en oeuvre un ou plusieurs dispositifs de préhenseur-courbeur et comprenant les étapes suivantes :
- /a/ préhension par le ou les dispositifs de préhenseur-courbeur des produits (O) en position de repos (PR) sur une surface support (3), position dans laquelle chaque produit (O) a une longueur initiale (Li) entre ses deux extrémités longitudinales,
- /b/ mise en contrainte par le ou les dispositifs de préhenseur-courbeur des produits (O) dans une position courbée (PC), position dans laquelle chaque produit (O) a une longueur réduite (Lr) entre ses deux extrémités longitudinales inférieure à la longueur initiale (Li), et,
- Ici dépose et insertion par le ou les dispositifs de préhenseur-courbeur des produits (O) en position courbée (PC) dans ledit au moins un emballage (E).

## Description

La présente divulgation est relative à un procédé mécanisé de courbement et de chargement de produits dans des emballages, ainsi qu'à un dispositif de préhenseur-courbeur permettant la mise en oeuvre d'un tel procédé et à un ensemble comprenant une pluralité de tels dispositifs préhenseur-courbeur.

### Domaine technique

La présente divulgation relève du domaine des procédés automatisés de production industrielle. Plus précisément, la présente divulgation est relative au domaine du chargement et de l'emballage de produits agro-alimentaires.

### Technique antérieure

Les installations automatisées et robotisées se sont largement développées dans le secteur de la production industrielle, et remplacent désormais les opérateurs pour les opérations à forte pénibilité, notamment celles nécessitant des manipulations à répétition d'un nombre important de marchandises, parfois de grandes dimensions et/ou très lourdes.

Classiquement, les installations de production industrielle pour le transport, la préparation et/ou le chargement de produits sont équipées par des robots de « picking » ou « pick and place ». Ces machines sélectionnent, trient et déplacent les marchandises d'une surface à une autre. Pour effectuer ces opérations, les robots sont classiquement pourvus d'un bras robotisé articulé et d'un système pour attraper et/ou relâcher plusieurs produits simultanément, typiquement plusieurs dizaines de fois par minute.

En particulier, les industries agroalimentaires utilisent un ensemble d'installations robotisées, et typiquement les robots de picking qui permettent de manipuler et conditionner rapidement les produits alimentaires, à partir d'un vrac de produits alimentaires jusqu'à leur dépose dans un emballage final. Il est donc largement connu de telles installations utilisant ces technologies pour le chargement de produits alimentaires, tels que des saucisses, dans des emballages et barquettes thermoformés.

Dans les secteurs industriels, il existe par ailleurs un besoin croissant pour réduire l'empreinte carbone et notamment, pour réduire les déchets produits non-recyclables et/ou polluants. En particulier, une part importante de la pollution générée par l'industrie de production agroalimentaire provient des emballages, qui sont majoritairement à usage unique et composés de matériaux principalement plastiques.

Une grande partie des industries utilisatrices de ces emballages cherche à réduire sa consommation de plastiques. La principale solution consiste à remplacer les emballages existants par des alternatives écologiques, utilisant des matériaux respectueux de l'environnement tels que des biomatériaux, confectionnés en circuit court, réutilisables et/ou nécessitant le moins de matières/énergie possibles.

En revanche, ces solutions restent pour le moment trop coûteuses pour les industriels et les méthodes de fabrication de ces emballages alternatifs ne sont pas encore suffisamment développées pour remplacer l'ensemble des emballages et pour tenir le rythme de production.

De plus, concernant les denrées alimentaires, des normes hygiéniques, d'étanchéité, de composition, etc, des emballages doivent être respectées pour le contact et la conservation des produits. Les matériaux plastiques et/ou polluants employés dans les emballages répondent à ces normes et sont pour le moment difficilement remplaçables en totalité.

### Résumé

La présente divulgation vient améliorer la situation.

Il est proposé un procédé mécanisé de courbement et de chargement d'un ou plusieurs produits longilignes présentant deux extrémités longitudinales dans au moins un emballage mettant en oeuvre un ou plusieurs dispositifs de préhenseur-courbeur et comprenant les étapes suivantes :
- /a/ préhension par le ou les dispositifs de préhenseur-courbeur du ou des produits en position de repos sur une surface support, position dans laquelle le ou chaque produit a une longueur initiale entre ses deux extrémités longitudinales,
- /b/ mise en contrainte par le ou les dispositifs de préhenseur-courbeur du ou des produits dans une position courbée, position dans laquelle le ou chaque produit a une longueur réduite entre ses deux extrémités longitudinales inférieure à la longueur initiale, et,
- Ici dépose et insertion par le ou les dispositifs de préhenseur-courbeur du ou des produits en position courbée dans ledit au moins un emballage.

Les caractéristiques exposées dans les paragraphes suivants peuvent, optionnellement, être mises en oeuvre, indépendamment les unes des autres ou en combinaison les unes avec les autres.

Selon un mode de réalisation, ledit au moins un emballage présente un fond et des rebords, et dépose en Ici est obtenue dans la position courbée du ou des produits présentant la longueur réduite, en garantissant un décalage entre les extrémités longitudinales du ou de chaque produit et les rebords en vis-à-vis des extrémités longitudinales au moins supérieur à une marge seuil.

Selon un mode de réalisation, dans la longueur initiale, le décalage entre les extrémités longitudinales du ou de chaque produit et les rebords en vis-à-vis des extrémités longitudinales est inférieur à la marge seuil.

Selon un mode de réalisation, le ou chaque dispositif de préhenseur-courbeur comprend une ou plusieurs ventouses, et la préhension en /a/ est obtenue par mise en contact de la ventouse avec le produit, et mise en dépression de la ou les ventouses et la dépose en Ici est obtenue par arrêt de la dépression.

Selon un mode de réalisation, la surface de support est une bande convoyeuse, présentant en relief des logements, parallèles, recevant individuellement les produits longilignes.

Selon un mode de réalisation, le ou les dispositifs de préhenseur-courbeur sont manipulés par un bras robotisé, et le bras robotisé assure le déplacement du ou des produits saisis par le ou les dispositifs de préhenseur-courbeur depuis la surface de support en /a/, et jusqu'à la dépose en Ici.

La présente divulgation concerne également un dispositif de préhenseur-courbeur convenant pour la mise en oeuvre du procédé mécanisé de courbement et de chargement, comprenant :
- au moins une ventouse comportant des soufflets flexibles, reliée à au moins un port de vide permettant d'actionner l'aspiration de la ventouse, la ventouse étant configurée pour saisir par aspiration dans une direction d'aspiration le produit en position de repos durant l'étape /a/, et pour tirer par aspiration continue dans un sens de rétractation de la ventouse, affaissant les soufflets de la ventouse, durant l'étape /b/ en provoquant un déplacement du produit par rapport à une partie fixe du dispositif de préhenseur-courbeur, et,
- au moins une portion de contre-appui inférieure comportant au moins une surface de contact, en particulier concave, configurée pour venir en contre-appui sur le produit lors de la rétraction de la ventouse dans un sens opposé au sens de rétractation de la ventouse sur le produit durant l'étape /b/, afin de le mettre en position courbée.

Selon un mode de réalisation, la partie fixe comporte un système de réglage de l'écartement entre la ou les ventouses et ladite au moins portion de contre appui configuré pour autoriser le déplacement de la au moins une ventouse selon au moins deux positions relatives, comprenant une première position dans laquelle la mise en contrainte du produit sur la surface de contact est faible, le produit est peu courbé et sa longueur réduite présente une première valeur, et une deuxième position dans laquelle la mise en contrainte du produit sur la surface de contact est forte, le produit est très courbé et sa longueur réduite présente une deuxième valeur, différente de la première valeur.

Selon un autre aspect, la présente divulgation concerne encore un dispositif de préhenseur-courbeur convenant pour la mise en oeuvre du procédé mécanisé de courbement et de chargement, comprenant trois ventouses, deux ventouses latérales situées de part et d'autre d'une ventouse centrale, lesdites trois ventouses comportant des soufflets flexibles et étant reliées chacune à au moins un port de vide permettant d'actionner l'aspiration de chacune des trois ventouses,
dans lequel les trois ventouses sont configurées pour saisir par aspiration dans une direction d'aspiration le produit en position de repos durant l'étape /a/, et pour tirer par aspiration continue dans un sens de rétractation des trois ventouses, affaissant les soufflets des ventouses, durant l'étape /b/ en provoquant un déplacement du produit par rapport à une partie fixe du dispositif de préhenseur-courbeur,
et dans lequel ladite ventouse centrale est configurée pour se rétracter selon une amplitude de rétractation supérieure à une amplitude de rétractation desdites ventouses latérales lors de l'étape /b/, permettant de mettre le produit en position courbée.

La présente divulgation concerne encore un ensemble préhenseur modulaire permettant la mise en oeuvre du procédé mécanisé de courbement et de chargement, comprenant une armature principale comprenant des rails principaux et une pluralité de préhenseurs-courbeurs, montés parallèles entre eux les uns à la suite des autres en coulissement sur lesdits rails principaux, lesdits dispositifs de préhenseurs-courbeur regroupéss en plusieurs groupes de préhenseurs, indépendants, en coulissement le long des rails principaux, et dans lequel l'armature principale est équipée d'au moins un actionneur configuré pour faire coulisser la pluralité de préhenseurs le long des rails principaux :
- entre une position de prise dans laquelle les préhenseurs-courbeurs desdits groupes de préhenseur sont regroupés au centre de l'armature principale juxtaposés les uns à la suite des autres sur les rails principaux, et chacune des deux extrémités des rails principaux est laissée libre selon un espacement d'extrémité, et
- une position de dépose, dans laquelle les préhenseurs-courbeurs des groupes de préhenseurs sont disposés en une position espacée, lesdits groupes étant séparés les uns des autres par un espacement de groupe et chacun des groupes ayant une longueur de groupe.

Selon un mode de réalisation, lesdits dispositifs de préhenseur-courbeur appartenant à un même groupe parmi la pluralité de groupes, sont solidaires, deux à deux, par des tiges de liaison amovibles, les tiges s'engageant par deux extrémités de chaque tige dans deux logements des dispositifs préhenseur-courbeur par emboitement élastique.

Selon un mode de réalisation, le procédé mécanisé pour le courbement et le chargement d'une pluralité de produits dans des emballages de longueur, supérieure à la longueur de groupe, et de largeur d'emballage, mettant en oeuvre l'ensemble préhenseur modulaire, dans lequel l'ensemble préhenseur est placé en position de prise préalablement à l'étape /a/, comprend les étapes suivantes :
- /a/ préhension par la pluralité de préhenseurs de la pluralité de produits uniformément répartis et se déplaçant sur la surface de support en position de repos,
- /b/ mise en contrainte et courbement de la pluralité de produits par la pluralité de préhenseurs dans la position courbée,
- Ici mise en place de l'ensemble préhenseur en position de dépose dans laquelle la pluralité de préhenseurs tenant la pluralité de produits courbés est divisée en une pluralité de groupes, chaque groupe étant de longueur de groupe, et,
- /d/ dépose et insertion de chacun des groupes de produits en position courbée dans chacun des emballages.

Selon un mode de réalisation, les produits sont des produits alimentaires, en particulier des saucisses.

### Brève description des dessins

D'autres caractéristiques, détails et avantages apparaîtront à la lecture de la description détaillée ci-après, et à l'analyse des dessins annexés, sur lesquels :
**Fig. 1**

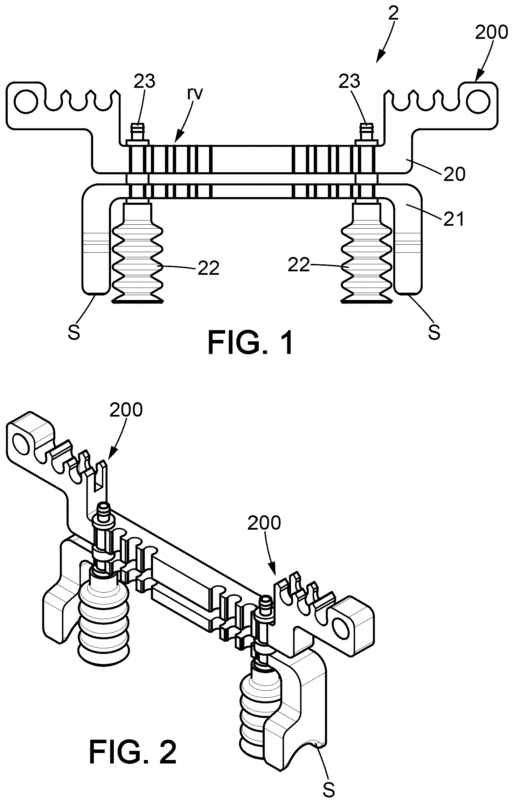

   [Fig. 1] montre une vue de face d'un dispositif de préhenseur-courbeur comprenant une partie fixe et une portion de contre-appui avec des surfaces de contact concaves. Le dispositif de préhenseur-courbeur comprend en outre des ventouses à soufflets, reliées chacune à un port de vide, et pouvant être réglées l'une par rapport à l'autre grâce à un système de réglage de l'espacement des ventouses. La partie fixe comprend des logements de fixation.
**Fig. 2**
   [Fig. 2] représente une vue de trois-quarts du dispositif préhenseur-courbeur selon la figure 1. Cette vue montre un mode de réalisation préféré des surfaces de contact concaves.
**Fig. 3**

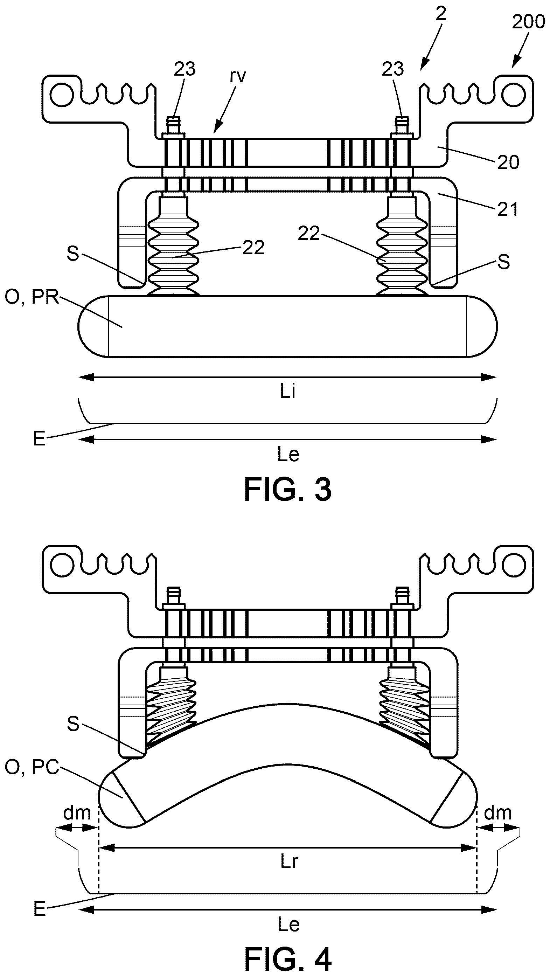

   [Fig. 3] montre une vue consécutive de la figure 1, où les ventouses du dispositif de préhenseur-courbeur saisissent un produit, longiligne, en position de repos, présentant une longueur initiale. Sous le produit longiligne est représentée une section transversale d'un emballage de longueur d'emballage inférieure à la longueur initiale du produit en position de repos.
**Fig. 4**
   [Fig. 4] montre une vue consécutive de la figure 3, où les ventouses du dispositif de préhenseur-courbeur aspirent le produit vers la partie fixe du préhenseur-courbeur, affaissant les soufflets des ventouses en contact avec le produit. Les surfaces de contact concaves viennent mettre en contrainte les extrémités du produit, dans un sens opposé au sens d'aspiration des ventouses. Le produit longiligne est alors mis dans sa position courbée, et est désormais de longueur réduite, inférieure à la longueur initiale en position de repos, et inférieur à la longueur de l'emballage d'une marge seuil.
**Fig. 5**

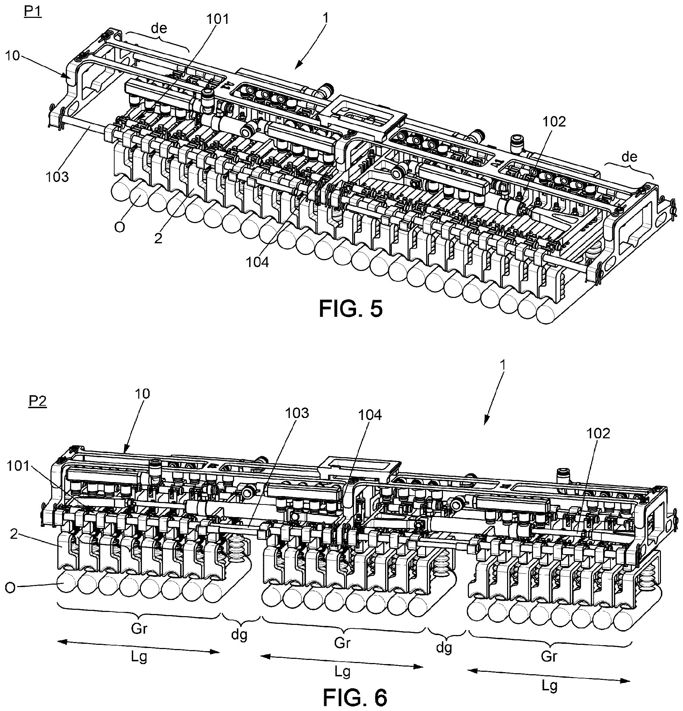

   [Fig. 5] montre un ensemble préhenseur modulaire, mettant en oeuvre une pluralité de dispositifs préhenseur-courbeur, tels que représentés sur les figures 1 à 4. L'ensemble ici illustré, comprend vingt-quatre dispositifs préhenseur-courbeurs, fixés en coulissement à des rails principaux d'une armature principale de l'ensemble.
**Fig. 6**
   [Fig. 6] est une vue d'une seconde position de l'ensemble préhenseur modulaire représenté en figure 5, où les dispositifs de préhenseur-courbeurs coulissent le long des rails principaux et sont répartis en trois groupes de préhenseur-courbeurs. Dans ce cas représenté, il y a trois groupes de huit préhenseur-courbeurs, séparés d'un espacement de groupe, et chaque groupe s'étend selon une longueur de groupe.
**Fig. 7**

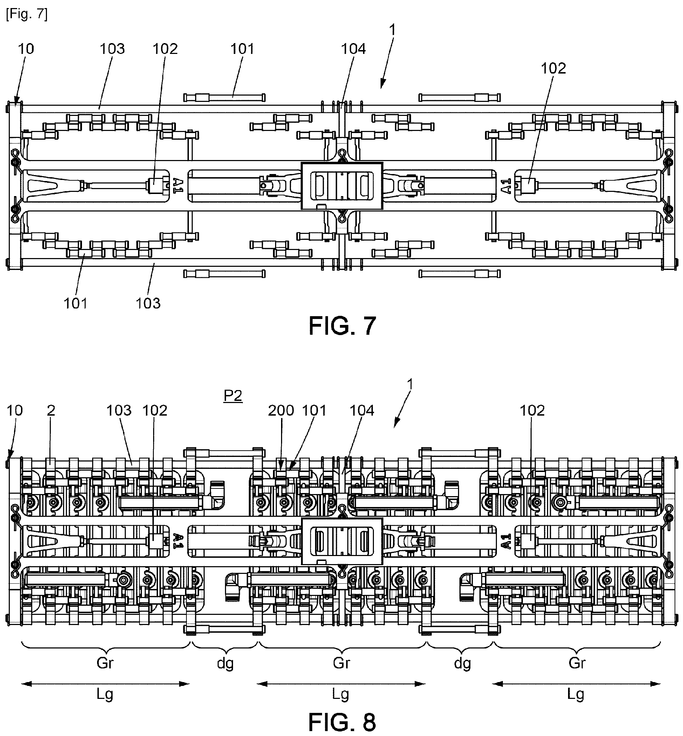

   [Fig. 7] montre une vue du dessus de l'ensemble préhenseur modulaire, dépourvu des dispositifs de préhenseur-courbeur. Cette vue met en avant l'armature principale, les rails principaux, un centre de l'armature, des actionneurs ainsi que des tiges de liaison.
**Fig. 8**
   [Fig. 8] est une vue consécutive à la figure 7, de l'ensemble préhenseur modulaire équipé par les groupes de préhenseurs-courbeurs, répartis selon trois groupes de huit préhenseurs-courbeurs. Les deux groupes de préhenseurs-courbeurs latéraux sont positionnés aux extrémités longitudinales des rails principaux, et le groupe central est fixé au centre de l'armature principale.
**Fig. 9a**

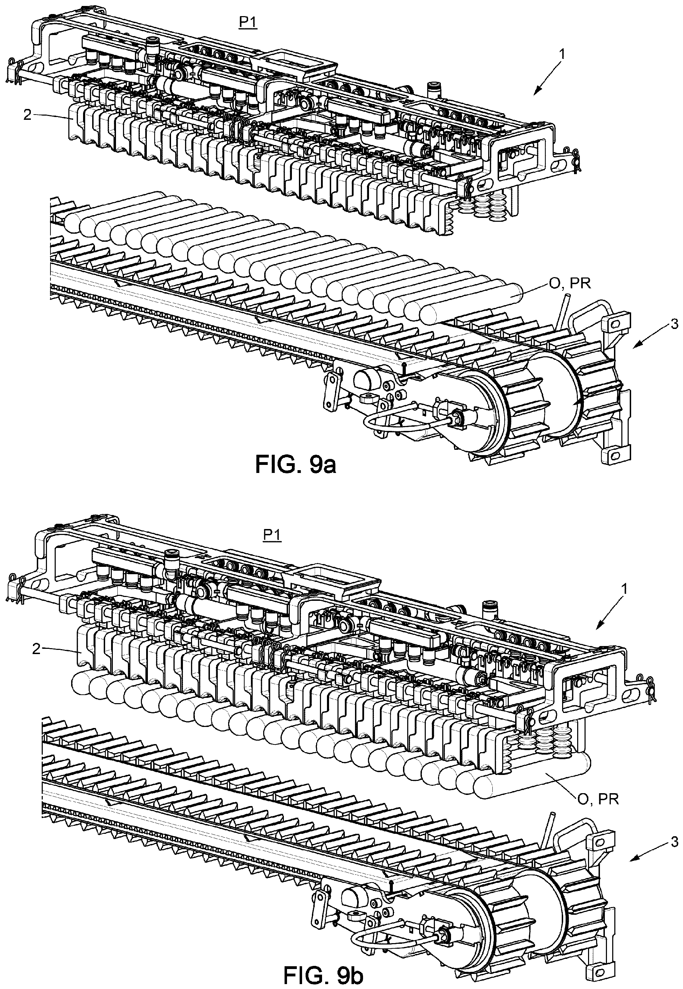

   [Fig. 9a] montre une première étape d'un procédé de courbement et de chargement d'une pluralité de produits dans des emballages, mettant en oeuvre l'ensemble préhenseur modulaire, dans laquelle l'ensemble préhenseur modulaire est positionné au-dessus d'une surface de support sur laquelle se déplace une pluralité de produits longilignes en position de repos.
**Fig. 9b**
   [Fig. 9b] montre une seconde étape du procédé de courbement et de chargement d'une pluralité de produits dans des emballages, dans laquelle les produits sont saisis par les ventouses des dispositifs de préhenseur-courbeur de l'ensemble préhenseur modulaire.
**Fig. 9c**

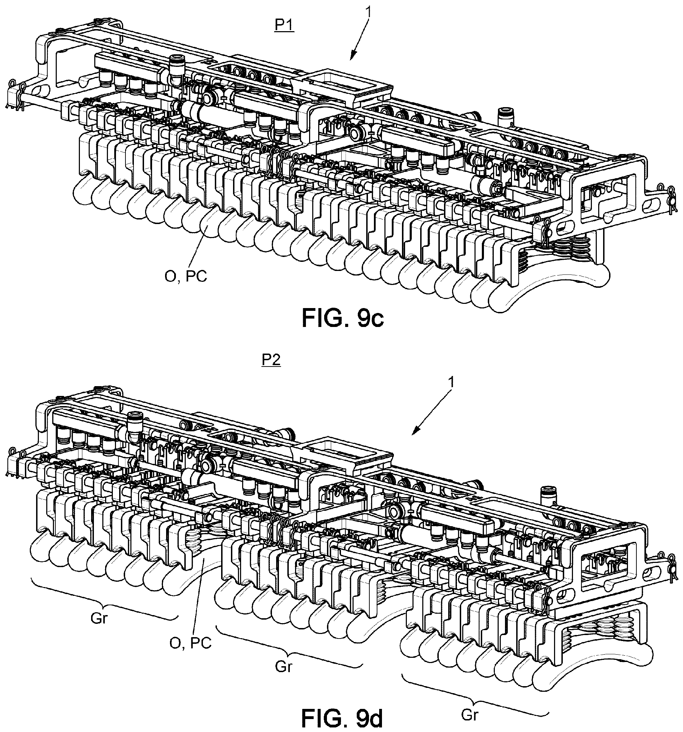

   [Fig. 9c] montre une troisième étape du procédé de courbement et de chargement d'une pluralité de produits dans des emballages, dans laquelle les ventouses aspirent les produits dont les extrémités sont mises en contrainte et en butée contre les surfaces de contact des préhenseurs-courbeurs. Les produits sont alors placés en position courbée.
**Fig.9d**
   [Fig. 9d] montre une quatrième étape du procédé de courbement et de chargement d'une pluralité de produits dans des emballages, dans laquelle les groupes de préhenseurs-courbeurs maintenant les produits en position courbée sont formés. Sur cette figure, trois groupes de huit préhenseurs-courbeurs, maintenant chacun un produit en position courbée, sont représentés.
**Fig. 9e**

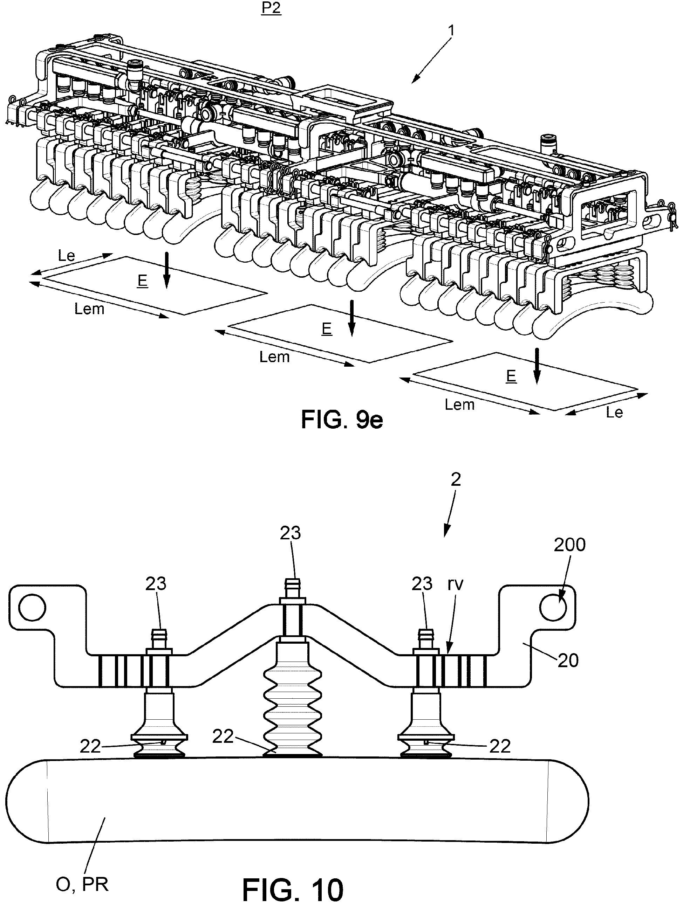

   [Fig. 9e] montre une cinquième étape du procédé de courbement et de chargement d'une pluralité de produits dans des emballages, dans laquelle les groupes de produits sont placés au-dessus d'emballages pour leur chargement. Les emballages présentent une largeur d'emballage sensiblement supérieure à la longueur de groupe de groupe, et une longueur d'emballage, sensiblement supérieure à la longueur réduite des produits en position courbée. Sur cette figure, les trois groupes de produits sont placés au-dessus de trois emballages. Les flèches illustrent le sens de dépose des groupes de produits dans les emballages, par désactivation de la dépression des ventouses des préhenseurs-courbeurs.
**Fig.10**
   [Fig. 10] montre une vue de face d'un deuxième mode de réalisation du dispositif de préhenseur-courbeur comprenant une partie fixe sur laquelle sont positionnées trois ventouses à soufflets, deux ventouses latérales et une ventouse centrale, saisissant un produit, longiligne, en position de repos. Chacune des trois ventouses est reliée à un port de vide. Les ventouses latérales peuvent être réglées l'une par rapport à l'autre grâce à un système de réglage de l'espacement des ventouses et la ventouse centrale est fixe. La partie fixe comprend en outre des logements de fixation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente divulgation est relative à un procédé mécanisé de courbement et de chargement d'un ou plusieurs produits O longilignes, présentant deux extrémités longitudinales, dans au moins un emballage E mettant en oeuvre un ou plusieurs dispositifs de préhenseur-courbeur. Les produits longilignes O peuvent être typiquement des produits alimentaires, par exemple saucisses, en particulier d'origine animal, voire végétal.

Le procédé comprend les étapes suivantes :
- /a/ préhension par le ou les dispositifs de préhenseur-courbeur du ou des produits O en position de repos PR sur une surface support 3, position dans laquelle le ou chaque produit O a une longueur initiale Li entre ses deux extrémités longitudinales,
- /b/ mise en contrainte par le ou les dispositifs de préhenseur-courbeur du ou des produits O dans une position courbée PC, position dans laquelle le ou chaque produit O a une longueur réduite Lr entre ses deux extrémités longitudinales inférieure à la longueur initiale Li, et,
- Ici dépose et insertion par le ou les dispositifs de préhenseur-courbeur du ou des produits O en position courbée PC dans ledit au moins un emballage E.

Un tel procédé permet de réduire l'encombrement des produits O à emballer en les courbant. Les produits courbés, de longueur réduite Lr, peuvent alors être insérés dans des emballages plus restreints. Alternativement, plutôt que d'utiliser des emballages plus petits, il est aussi possible d'insérer un plus grand nombre de produits courbés dans un même emballage, ou d'insérer des produits de plus grande longueur. Ceci peut présenter par exemple l'avantage d'écouler des stocks existants d'emballages de dimensions classiques, chargés avec plus de produits O.

Comme illustré à la figure 2, et de manière générale, l'emballage E peut présenter un fond et des rebords. Notamment, selon un mode de réalisation, l'emballage se présente sous forme d'une barquette étanche et operculable. Par exemple, la barquette est thermoformée, composée de plastique polyéthylène (PE), polyéthylène téréphtalate (PET) et/ou polypropylène (PP), et/ou de polystyrène extrudé (PSE thermoformé) et fermée par un opercule par exemple un film alimentaire d'operculage apte à la congélation, en PE ou PP. Tout autre matériau dont la composition permet le contact avec un produit nu, notamment alimentaire, peut convenir.

Les emballages peuvent en outre comprendre des matériaux recyclables, par exemple des plastiques recyclés, type rPET. Il est également possible d'utiliser des emballages écologiques, utilisant des composants biodégradables et/ou éco-conçus, tels que des barquettes compostables en cellulose moulée. Notamment, il est préféré des alternatives moins volumineuses et plus légères pour le stockage, fabriquées avec le moins de matière possible, conservant une étanchéité et une mise sous vide des produits optimales.

La dépose dans l'emballage E de l'étape Ici du procédé est obtenue dans la position courbée PC du ou des produits O de longueur réduite Lr. Cette dépose est faite en garantissant un décalage entre les extrémités longitudinales de chaque produit O et les rebords de l'emballage E en vis-à-vis des extrémités longitudinales au moins supérieur à une marge seuil dm, comme représentée sur la figure 2.

La marge seuil dm est une marge de sécurité, de dimensions comprises en particulier entre 0 et 10 mm, par exemple 5 mm. Elle est choisie pour assurer une insertion des produits O dans l'emballage E sans forçage et sans dommage des produits, notamment au niveau de leurs extrémités. A l'inverse, il est préférable que la marge seuil ne soit pas trop élevée, car l'encombrement des produits O ne serait pas optimisé : les produits en position courbée PC, notamment dans le cas de produits agroalimentaires flexibles et déformables, tendent à revenir naturellement dans leur position initiale de repos PR, et donc leur longueur augmente sensiblement en tendant vers la longueur initiale Li, une fois insérés dans l'emballage E.

Par ailleurs, le décalage entre les extrémités longitudinales de chaque produit O en position de repos PR et de longueur initiale Li, d'une part, et les rebords de l'emballage E, d'autre part, est inférieur à la marge seuil dm. En d'autres termes, le produit O dans sa position de repos PR est trop proche des rebords de l'emballage E pour assurer son insertion robotisée dans l'emballage E avec fiabilité, voire même éventuellement le produit peut dépasser longitudinalement de l'emballage E, par rapport aux rebords.

Selon la présente divulgation, le procédé comprend la mise en place du ou des dispositifs préhenseur-courbeur 2 pour attraper, courber puis déposer les produits O. Le dispositif de préhenseur-courbeur 2 peut comprendre à cet effet une ou plusieurs ventouses 22. La préhension de l'étape /a/ est alors obtenue par mise en contact de la ventouse 22 avec le produit O, puis sa mise en dépression. La dépose du produit O à l'étape Ici est ensuite typiquement obtenue par arrêt de la dépression.

La surface de support 3 permettant d'acheminer les produits O est notamment une bande convoyeuse, présentant en relief des logements, parallèles, recevant individuellement les produits O longilignes. Un exemple de surface de support 3 est visible sur la figure 9a.

Une telle surface de support 3 avec des logements parallèles permet d'agencer individuellement les produits O, alors en position de repos PR, respectivement dans les logements, et les répartit uniformément, et dans le sens de prise adéquat par rapport aux ventouses 22 des dispositifs de préhenseur-courbeur 2.

Selon un mode de réalisation, le ou les dispositifs de préhenseur-courbeur sont manipulés par un bras robotisé, qui assure le déplacement du ou des produits O saisis par le ou les dispositifs de préhenseur-courbeur 2 depuis la surface de support 3 en /a/, et jusqu'à la dépose en Ici.

Le bras robotisé peut par exemple être équipé de dispositifs de reconnaissance de formes, de dimensions, etc, tels que des caméras pour optimiser le déplacement et la cadence de production.

Selon un mode de réalisation de l'invention, le dispositif de préhenseur-courbeur 2 convenant pour la mise en oeuvre du procédé mécanisé de courbement, notamment illustré aux figures 1 à 4, comprend au moins une ventouse 22 comportant des soufflets flexibles, reliée à au moins un port de vide 23 permettant d'actionner l'aspiration de la ventouse 22. La ventouse 22 est ainsi configurée pour saisir par aspiration dans une direction d'aspiration (verticalement) le produit O durant l'étape /a/, illustré à la figure 3, et pour le tirer par aspiration continue dans un sens de rétractation de la ventouse 22 (en utilisation classique, vers le haut), affaissant ainsi les soufflets de la ventouse 22, durant l'étape /b/, et comme illustré à la figure 4. Les soufflets ainsi affaissés suivent parfaitement la surface du produit O saisi par la ventouse. La rétractation en continu de la ventouse 22 durant l'étape /b/ provoque également un déplacement (vers le haut) du produit O par rapport à une partie fixe 20 du dispositif de préhenseur-courbeur 2.

Le dispositif préhenseur-courbeur 2 comprend en outre au moins une portion de contre-appui 21 comportant au moins une surface de contact S, en particulier concave. Une telle surface de contact S concave est ainsi configurée pour venir en contre-appui sur le produit O lors de la rétraction de la ventouse 22, dans un sens opposé (vers le bas) au sens de rétractation de la ventouse 22 sur le produit O durant l'étape /b/. Le produit O ainsi tiré (vers le haut) par la ventouse 22, et ses extrémités venant buter contre les surfaces S, se courbe en position courbée PC, telle que représentée sur la figure 4 notamment.

Selon un mode de réalisation préféré, le dispositif préhenseur-courbeur 2 comprend deux ventouses 22 positionnées lors de la prise de part et d'autre du centre du produit, situées chacune sur une portion du produit O définie entre le centre et l'une des extrémités du produit O. Les surfaces de contact S à fonction de contre-appui, sont situées de part et d'autre des deux ventouses 22, suivant la direction séparant les deux ventouses. Chacune des surfaces S est située entre l'une des ventouses 22 et l'une des extrémités du produit O lors de la prise.

Selon un mode de réalisation alternatif, la position des ventouses et des surfaces de contact S sur le dispositif de préhenseur-courbeur peuvent être inversées, les ventouses 22 se situant entre les surfaces de contact S et les extrémités du produit O. Dans une telle configuration, le courbement du produit O se fait par la mise en contrainte de la portion centrale du produit O, où les surfaces de contact S sont mises en contact avec la portion centrale du produit O, en contre-appui, et les extrémités du produit O sont aspirées et tirées par les ventouses 22.

Telle que représentée sur les différentes figures, et selon un mode de réalisation préféré, les ventouses 22 se présentent avec une section transversale circulaire. Elles peuvent être aussi choisies avec d'autres formes, par exemple avec une forme oblongue, et avec des dimensions variables, adaptées au produit O à saisir. Par exemple, pour la préhension d'une saucisse, la ventouse est de préférence circulaire, et son diamètre peut être compris entre 5 et 20 mm, tel que 15 mm.

La ventouse 22 peut en outre comprendre un corps creux en matériau élastomère, tel que du vinyle, du silicone ou du nitrile, et comprend plusieurs soufflets de sorte à s'adapter et être bien en contact avec les faces courbées du produit O à saisir.

La surface S étant configurée pour venir en appui sur le produit O, elle est également de préférence adaptée à la forme particulière de celui-ci. Notamment, dans le cas de produits O alimentaires, tels que des saucisses, la courbure de la surface S est conçue suivant un diamètre supérieur au diamètre transversal des saucisses, par exemple le diamètre de la courbure de la surface S est égal à 1.2 fois le diamètre transversal des saucisses, et jusqu'à 3 fois le diamètre transversal des saucisses. La surface S comprend, de préférence, un revêtement en matériaux lisses et souples, tels que du silicone alimentaire, afin de réduire les dommages sur le produit O.

Par ailleurs, la ventouse 22, ses soufflets, ainsi que les surfaces de contact S, ne présentent aucun nid de rétention et conviennent aux applications alimentaires, avec des matériaux spécifiques pour le contact alimentaire, répondant aux normes alimentaires FDA et européennes CE (normes EN 1672-2:2005+A1 :2009, ISO 14159:2002). Le dispositif répond ainsi aux standards 3A et EHEDG.

La mise en dépression de la ventouse 22 est assurée par une source de vide, avec une pompe à vide Venturi par exemple. La source de vide est externe au dispositif de préhenseur, par exemple positionnée sur le bras robotisé. Il est également possible d'utiliser alternativement une source d'air comprimé avec un port pneumatique pour générer les changements de pression de la ventouse 22.

Afin d'obtenir le meilleur ratio de longueur de produit O initiale Li avec la longueur finale désirée réduite Lr, le dispositif de préhenseur-courbeur 2 selon la présente divulgation peut comporter en outre un système de réglage de l'écartement rv sur sa partie fixe 20, entre la ou les ventouses et la portion de contre appui 21, visible aux figures 1 à 4. Le système de réglage de l'espacement rv est ainsi configuré pour autoriser le déplacement des ventouses 22 selon au moins deux positions relatives, comprenant une première position dans laquelle la mise en contrainte du produit O sur la surface de contact S est faible, le produit O est peu courbé et sa longueur réduite Lr présente une première valeur, et une deuxième position dans laquelle la mise en contrainte du produit O sur la surface de contact S est forte, le produit O est très courbé et sa longueur réduite Lr présente une deuxième valeur, différente de la première valeur.

Le système de réglage, peut comporter une pluralité d'orifices de montage, espacés en longueur suivant une direction en longueur du support. La pluralité d'orifices de montage permettant sélectivement l'insertion d'une tige de fixation de la ventouse 22, et sa fixation, par la mise en place d'un organe de fixation sur une partie supérieure de la tige, par exemple la mise en place d'un écrou vissé sur une extrémité filetée dépassant de la tige.

La première valeur est définie pour être inférieure à la deuxième valeur. De préférence, la portion centrale du produit O en position courbée PC est décalée de 20 mm par rapport aux extrémités du produit O.

Lorsque le dispositif comprend deux ventouses 22, les deux ventouses peuvent être typiquement réglées simultanément, de manière symétrique par rapport à un milieu du support.

Par ailleurs, en fonction de la forme du produit O, il est tout à fait possible de régler de manière asymétrique les ventouses, de sorte que le produit O soit plus courbé vers une extrémité que vers l'autre. Ceci peut trouver une application en particulier pour des produits O eux-mêmes asymétriques, notamment alimentaires, tels que des pièces de viande par exemple.

Par ailleurs, le système de réglage de l'écartement rv permet avantageusement d'adapter le dispositif de préhenseur-courbeur 2 à des produits O de longueurs initiales Li différentes, par exemple, différents types de saucisses, des produits présentant une résistance plus ou moins accrue à la mise en contrainte d'une extrémité à l'autre, ou pour s'adapter à des emballages E plus réduits.

Selon un autre mode de réalisation possible représenté à la figure 10, le dispositif de préhenseur-courbeur 2 comprend trois ventouses 22, soit deux ventouses latérales situées de part et d'autre d'une ventouse centrale. Les trois ventouses 22 comportent des soufflets flexibles et sont reliées chacune à au moins un port de vide 23 permettant d'actionner l'aspiration de chacune des trois ventouses 22. Dans ce mode de réalisation, les trois ventouses 22 sont configurées pour saisir par aspiration dans une direction d'aspiration le produit O en position de repos PR durant l'étape /a/, et pour tirer par aspiration continue dans un sens de rétractation des trois ventouses 22, affaissant les soufflets des ventouses 22, durant l'étape /b/ en provoquant un déplacement du produit O par rapport à une partie fixe 20 du dispositif de préhenseur-courbeur 2. La ventouse centrale est configurée pour se rétracter selon une amplitude de rétractation supérieure à une amplitude de rétractation des ventouses latérales lors de l'étape /b/, permettant de mettre le produit O en position courbée PC.

Dans ce mode de réalisation, la ventouse centrale est alors configurée pour saisir la portion centrale du produit O en position de repos PR, et les deux ventouses latérales sont configurées pour saisir les extrémités du produit O.

La différence entre l'amplitude de rétraction de la ventouse centrale et l'amplitude de rétractation des deux ventouses latérales à l'étape /b/, correspondant au décalage entre la portion centrale et les extrémités du produit O en positon courbée PC, est de préférence de 20 mm.

Alternativement, il est possible de concevoir des ventouses latérales avec une amplitude de rétractation supérieure à l'amplitude de rétractation de la ventouse centrale. Dans un tel cas, le produit O est mis dans sa position courbée par ses extrémités, aspirées et tirées par les ventouses latérales.

De préférence, les trois ventouses 22 sont au même niveau dans leur position déployée, préalablement à l'étape /a/, afin qu'elles puissent être mises en contact simultanément sur le produit O à saisir en position de repos PR durant l'étape /a/.

Les trois ventouses 22 peuvent comprendre un corps creux en matériau élastomère, tel que du vinyle, du silicone ou du nitrile, où tout matériau répondant aux normes alimentaires, et plusieurs soufflets. Selon un mode de réalisation préféré, les trois ventouses 22 se présentent avec une section transversale circulaire, et de préférence, la ventouse centrale présente un diamètre et une longueur supérieurs aux diamètres et longueurs des ventouses latérales ainsi qu'un nombre de soufflets plus important.

De plus, dans ce mode de réalisation, la partie fixe 20 peut comprendre un système de réglage de l'espacement rv des deux ventouses latérales. Le système de réglage rv est alors configuré pour autoriser le déplacement des ventouses latérales selon au moins deux positions relatives, en fonction du décalage désiré entre la portion centrale et les extrémités du produit O en position courbée PC. De préférence, la ventouse centrale est fixe et ne peut pas être déplacée sur la partie fixe 20.

Dans le contexte de production industrielle, la présente divulgation est aussi relative à un ensemble préhenseur modulaire 1 permettant la mise en oeuvre du procédé mécanisé de courbement et de chargement décrit ci-dessus, et comportant une pluralité de dispositifs préhenseur-courbeur 2. L'ensemble préhenseur modulaire 1 est notamment représenté aux figures 5 à 8.

Un tel ensemble préhenseur modulaire 1 comprend une armature principale 10 comprenant des rails principaux 103 sur lesquels sont montés en coulissement la pluralité de préhenseurs-courbeurs 2, parallèles entre eux et les uns à la suite des autres (figure 5). Les dispositifs de préhenseur-courbeur 2 sont regroupés en plusieurs groupes de préhenseurs Gr, indépendants, en coulissement le long des rails principaux 103 (figures 6, 7 et 8). L'armature principale 10 est équipée d'au moins un actionneur 102 particulièrement visible sur la figure 7, configuré pour faire coulisser la pluralité de préhenseurs 2 le long des rails principaux 103.

En outre, les préhenseurs 2 coulissent le long des rails principaux 103 ;
- entre une position de prise P1 illustrée à la figure 5, dans laquelle les préhenseurs-courbeurs 2 de chaque groupe de préhenseur Gr sont regroupés au centre 104 de l'armature principale 10, juxtaposés les uns à la suite des autres sur les rails principaux 103, et chacune des deux extrémités des rails principaux 103 est laissée libre selon un espacement d'extrémité de, et,
- une position de dépose P2 illustrée à la figure 6 notamment, dans laquelle les préhenseurs-courbeurs 2 des groupes de préhenseurs Gr sont disposés en une position espacée, où les groupes Gr sont séparés les uns des autres par un espacement de groupe dg et chacun des groupes Gr a une longueur de groupe Lg.

Notamment, un tel ensemble peut être monté sur un bras robotique automatisé, et équipé de dispositifs de reconnaissance de formes, de dimensions, etc, tels que des caméras.

Dans un mode de réalisation préféré, et tel que représenté par exemple à la figure 7, l'ensemble 1 comprend préférentiellement deux actionneurs 102. Ces deux actionneurs 102 comportent un système de vérin, avec un piston et une tige rétractable, relié chacun à un groupe Gr de préhenseurs-courbeurs 2. Dans la position de prise P1, la tige est rétractée dans le vérin. Dans la position de dépose P2 de séparation des groupes Gr, la tige est actionnée par le piston et déployée pour pousser et faire coulisser un groupe Gr le long des rails principaux 103.

Alternativement, il est également possible de concevoir chaque actionneur 102 de telle façon que la tige est déployée dans la position de prise P1, et rétractée dans la position de dépose P2 de séparation des groupes, pour tirer et faire coulisser un groupe Gr.

Un tel dispositif de vérin peut par exemple être un vérin simple-effet ou double-effet, actionné par un système de passage d'air avec des ports pneumatiques extérieurs.

Dans le mode de réalisation de l'invention, illustré aux figures 5 à 8, les rails principaux 103 sont dimensionnés pour accueillir trois groupes Gr de huit préhenseurs-courbeurs 2, avec un espacement dg entre chaque groupe Gr.

Il est possible de concevoir alternativement tout ensemble préhenseur modulaire plus grand ou plus petit. Notamment ses rails principaux 103 et/ou son armature principale 10 peuvent être dimensionnés afin d'accueillir plus ou moins de préhenseurs-courbeurs 2, et/ou plus ou moins de groupes Gr, et/ou avec des espacement dg entre chaque groupe Gr plus ou moins grands en fonction de la taille des produits O, et/ou du nombre de produits O à charger par emballage E, et/ou du nombre simultané d'emballages E, et/ou du dimensionnement spécifique de l'installation robotisée disponible (par exemple des surfaces de support 3), etc.

En outre, les dispositifs de préhenseur-courbeur 2 selon la présente divulgation, appartenant à un même groupe Gr, sont solidaires, deux à deux, selon un mode de réalisation avantageux par des tiges de liaison 101 amovibles, comme représentées sur les figures 6 et 8. Les tiges 101 s'engagent par leurs deux extrémités dans deux logements 200 des dispositifs préhenseur-courbeur 2 par emboitement élastique.

Les tiges de liaison 101 sont des éléments longilignes, et de préférence composées par au moins une portion fine de rayon inférieur, sur laquelle les préhenseurs-courbeurs 2 peuvent se fixer, voire coulisser, et par au moins une portion épaisse de rayon supérieur, sur laquelle les préhenseurs-courbeurs 2 ne peuvent pas coulisser. Les extrémités des tiges de liaison 101 sont pourvues chacune d'une butée.

Dans un mode de réalisation préféré et représenté par exemple à la figure 8, les tiges de liaison 101 se présentent en deux groupes :
- un premier groupe de tiges de liaison longues, sont positionnées entre les groupes Gr de préhenseurs-courbeurs 2. Seuls les préhenseurs-courbeurs 2 des extrémités de groupe Gr sont fixés à ces tiges amovibles (par exemple sur la figure 8, de gauche à droite, le huitième, le neuvième, le seizième et le dix-septième préhenseurs-courbeurs 2), en emboîtement élastique, par leurs logements 200. La longueur maximale de l'espacement de groupe dg est inférieure à la longueur des tiges de liaison longues. Les tiges de liaison longues assurent une liaison coulissante entre deux dispositifs préhenseur-courbeur 2 de deux groupes Gr successifs, suivant les rails 103, autorisant un rapprochement des deux dispositifs préhenseur-courbeur 2, dans la position de prise P1, et un écartement entre les deux groups Gr selon une course limitée et déterminée par la tige de liaison longue, fixant l'espacement des deux groupes Gr, dans la position de dépose P2 ;
- un second groupe de tiges de liaison courtes, maintient les dispositifs de préhenseurs-courbeurs 2 solidaires les uns des autres au sein d'un même groupe Gr. Ces tiges de liaison courtes sont configurées pour ne laisser aucun jeu mécanique entre deux préhenseurs-courbeurs 2 successifs, durant le coulissement des groupes Gr le long des rails principaux 103.

Dans le mode de réalisation représenté, les préhenseurs-courbeurs 2 sont fixés aux tiges de liaison par un système de clips et circlips. Tout dispositif de fixations alternatif adéquat peut être employé.

De préférence, la longueur des tiges de liaison courtes est choisie en fonction de la longueur Lg des groupes Gr de produit O nécessaire, typiquement bien inférieure à la longueur des emballages E à charger, et en particulier de longueur déterminée pour fixer l'écart entre deux dispositifs préhenseur-courbeur 2 lors de la position de prise P1. Cet écart correspond typiquement à l'entraxe séparant les logements parallèles de la surface support/du convoyeur 3. La longueur des tiges de liaison longues est choisie en fonction de l'écartement nécessaire entre les groupes Gr et les emballages E, et afin de fixer l'écartement dg entre les groupes Gr successifs dans la position de dépose P2.

L'ensemble préhenseur 1 comportant des tiges de liaison amovibles, permet avantageusement de reconfigurer rapidement le nombre de dispositifs préhenseur-courbeur 2, par groupe Gr. Une telle conception modulaire, comportant des dispositifs préhenseur-courbeur 2, amovibles les uns des autres, et des tiges de liaisons, permet avantageusement de solidariser les dispositifs préhenseur-courbeur 2 les uns aux autres au moyen desdites tiges courtes et longues, suivant différentes configurations possibles.

Une telle conception modulaire offre une adaptation rapide de la configuration de l'ensemble préhenseur 1 aux dimensions de l'emballage E, et/ au nombre de produits alimentaires O à saisir par groupe Gr, voire de l'espace séparant deux emballages E successifs lors de la dépose.

Selon un mode de réalisation préféré et dans le cas où il y a un nombre impair de groupes Gr, afin d'optimiser la séparation des groupes Gr le long des rails principaux 103, il est aussi possible de fixer à l'armature principale 10 les préhenseurs-courbeurs 2 du groupe Gr central. Ceci est par exemple illustré à la figure 8, où les deux préhenseurs-courbeurs 2 centraux du groupe Gr, situés de part et d'autre du centre 104 de l'armature principale 10 (sur la figure 8, de gauche à droite, les douzième et treizième préhenseurs-courbeurs), sont fixés immobiles et solidaires du centre 104 de l'armature principale 10. Avec une telle configuration, les groupes Gr latéraux, dont les préhenseurs-courbeurs 2 sont solidarisés les uns avec les autres par les tiges de liaison 101 courtes, sont écartés par le ou les actionneurs 102 du groupe Gr central vers les extrémités de l'armature principale 10, qui reste fixé au centre 104.

Il est bien entendu possible de concevoir tout autre dispositif adéquat pour séparer les groupes Gr de préhenseurs-courbeurs 2. Par exemple, il est possible d'envisager un actionneur 102 pour chaque groupe Gr à séparer, ou de remplacer les tiges par des butées amovibles sur les rails principaux 103.

Par ailleurs, la présente divulgation est également relative au procédé mécanisé de courbement et de chargement d'une pluralité de produits O simultanément dans des emballages E, mettant en oeuvre l'ensemble préhenseur modulaire 1 ainsi décrit.

Dans ce procédé, illustré notamment aux figures 9a à 9e, les emballages E sont de longueur Lem, supérieure à la longueur de groupe Lg, et de largeur d'emballage Le, et l'ensemble préhenseur modulaire 1 est placé en position de prise P1 préalablement à l'étape /a/ (figure 9a). Le procédé comprend alors les étapes suivantes :
- /a/ préhension par la pluralité de préhenseurs 2 de la pluralité de produits O uniformément répartis et se déplaçant sur la surface de support 3 en position de repos PR (figure 9b),
- /b/ mise en contrainte et courbement de la pluralité de produits O par la pluralité de préhenseurs 2 dans la position courbée PC (figure 9c),
- Ici mise en place de l'ensemble préhenseur 1 en position de dépose P2 dans laquelle la pluralité de préhenseurs 2 tenant la pluralité de produits O courbés est divisée en une pluralité de groupes Gr, chaque groupe Gr étant de longueur de groupe Lg (figure 9d), et,
- /d/ dépose et insertion de chacun des groupes Gr de produits O en position courbée PC dans chacun des emballages E (figure 9e).

De préférence, l'ensemble des étapes du procédé est réalisé par le bras robotisé automatisé.

Ainsi, préalablement à l'étape /a/ de la figure 9a, la surface de support 3 achemine en continu les produits O, chacun logé dans leur logement distinct, en position de repos PR. L'ensemble préhenseur modulaire 1 est positionné au-dessus de la surface de support 3 par le bras robotisé, en position de prise P1. La source de vide ne génère pas de dépression des ventouses 22 de chaque dispositif préhenseur-courbeur 2.

A l'étape /a/ de la figure 9b, l'ensemble préhenseur modulaire 1 est rapproché par le bras robotisé des produits O sur la surface de support 3, jusqu'à la mise en contact des ventouses 22 avec les produits O. Au contact des produits O, les ventouses 22 sont mises en dépression par activation de la source de vide, pour la préhension simultanée de la pluralité de produits O.

De préférence, à l'issue de l'étape /a/, une fois les produits O saisis, le bras robotisé positionne l'ensemble préhenseur modulaire 1 à distance de la surface de support 3.

A l'étape /b/ de la figure 9c, la dépression et l'aspiration continue des ventouses 22 produit l'affaissement des soufflets des ventouses parfaitement en contact avec les produits O saisis. Les ventouses se rétractent de cette manière, et les produits O sont tirés vers la partie fixe 20 des préhenseurs 2. Les extrémités des produits O viennent ainsi buter contre la portion de contre-appui 21 et contre les surfaces de contact S. Durant l'aspiration continue des ventouses 22, les extrémités des produits O sont maintenues par les surfaces de contact S dans une position basse, pendant que les parties centrales des produits O sont maintenues par les ventouses 22 rétractées dans une position haute. Ce mouvement d'opposition entre les extrémités et les parties centrales des produits O génère le courbement simultané des produits O en position courbée PC.

Durant l'étape Ici, illustrée à la figure 9d, les préhenseurs-courbeurs 2 tenant les produits O courbés sont séparés en plusieurs groupes Gr, par le ou les actionneurs 102 de l'ensemble préhenseur modulaire 1. Les tiges de liaison 101 assurent la séparation des groupes Gr selon l'espacement de groupe dg. Les groupes Gr ainsi formés sont de longueur Lg, inférieure à la longueur Lem des emballages E dans lesquels les produits O doivent être chargés.

De préférence, la différence entre la longueur Lg et la longueur Lem des emballages E peut varier entre 0 et 100 mm..

Dans l'illustration représentée à la figure 9d, il y a deux actionneurs 102 configurés pour pousser chacun un groupe Gr vers une extrémité opposée des rails principaux 103, et deux tiges de liaison 101 sont placées entre le huitième et le neuvième préhenseur-courbeur et entre le seizième et le dix-septième préhenseur-courbeur respectivement et de gauche à droite. Cette configuration représentée forme ainsi trois groupes Gr de huit préhenseurs-courbeurs 2, deux groupes Gr sont placés aux extrémités des rails principaux 103, et un troisième groupe Gr est maintenu au centre 104 de l'armature, avec quatre préhenseurs-courbeurs 2 situés de part et d'autre du centre 104. En détails, en passant de la position de prise P1 à la position de dépose P2, les deux actionneurs 102 actionnent leur tige qui se déploie et pousse sur chacun des groupes Gr latéraux de préhenseurs-courbeurs 2 vers les extrémités longitudinales des rails principaux 103. Les deux groupes Gr latéraux se désolidarisent ainsi du groupe central proche du centre 104, immobile, jusqu'à former entre eux l'espacement de groupe dg.

Les étapes /b/ et Ici peuvent être mises en oeuvre dans un ordre quelconque ou simultanément. Par exemple, il est possible de séparer les groupes Gr de produits O préalablement à leur mise en contrainte en position courbée PC.

Durant l'étape /d/, représentée sur la figure 9e, chaque groupe Gr de préhenseurs tenant les produits O courbés est positionné au-dessus d'un des emballages E à charger. Pour la dépose des produits, l'aspiration des ventouses 22 par dépression est désactivée, libérant les produits O courbés venant se placer les uns à la suite des autres dans l'emballage E.

Selon un mode de réalisation préféré, préalablement à l'étape /d/, ou durant l'étape /d/ avant la libération des produits O, l'ensemble préhenseur modulaire 1 est positionné proche et juste au-dessus des emballages E à charger, de sorte à éviter les dommages aux produits O et à préserver au maximum leur longueur réduite Lr lorsqu'ils sont relâchés.

Par ailleurs, les emballages E peuvent se déplacer sur une autre surface convoyeuse non représentée, comprenant de préférence des logements adaptés aux dimensions des emballages afin de les positionner parfaitement sous l'ensemble préhenseur modulaire 1 pour le chargement des groupes Gr de produits O courbés. De plus, lors de l'étape /d/ de dépose, les emballages E sont de préférence immobiles pour accueillir les produits O.

Une fois les produits O chargés dans les emballages E, une étape finale d'operculage peut être mise en oeuvre par exemple par une thermoformeuse en ligne, ou par une operculeuse industrielle de la chaîne de production, venant appliquer un film plastique sur les produits O de manière hermétique.

Pour la bonne réalisation du procédé précédemment décrit, il est possible de prévoir des moyens assurant la vérification du déroulement de chaque étape, notamment, si le bon nombre de produits O est saisi par les préhenseurs 2, si les emballages E sont bien positionnés sous les produits O à l'étape /d/, si les produits sont correctement en position courbée PC, ou tout autre point de vérification. Ceci peut être assuré par exemple de manière automatisée, classiquement par des caméras ou dispositif de reconnaissance de forme/dimensions équipant le bras robotisé, ou par un opérateur.

Selon un mode de réalisation de l'invention, les produits O sont des produits alimentaires, en particulier des saucisses.

### Liste des signes de référence

- 1 : Ensemble préhenseur modulaire,
- 10 : armature principale,
- 101 : tige de liaison,
- 102 : actionneur,
- 103 : rail principal,
- 104 : centre,
- 2 : préhenseur-courbeur,
- 20 : partie fixe,
- 21 : portion de contre-appui,
- 22 : ventouse,
- 23 : port de vide,
- 200 : logement,
- 3 : surface de support,
- de : espacement d'extrémité,
- dg : espacement de groupe,
- dm : marge seuil,
- E : emballage,
- Gr : groupe de préhenseurs-courbeurs,
- Le : largeur d'emballage,
- Lem : longueur d'emballage,
- Lg : longueur de groupe,
- Li : longueur initiale,
- Lr : longueur réduite,
- PC : position courbée,
- PR : position de repos,
- P1 : position de prise,
- P2 : position de dépose,
- O : produit,
- rv : réglage de l'écartement des ventouses,
- S : surface de contact.

## Revendications

1. Procédé mécanisé de courbement et de chargement d'un ou plusieurs produits (O) longilignes présentant deux extrémités longitudinales dans au moins un emballage (E) mettant en oeuvre un ou plusieurs dispositifs de préhenseur-courbeur et comprenant les étapes suivantes :
- /a/ préhension par le ou les dispositifs de préhenseur-courbeur du ou des produits (O) en position de repos (PR) sur une surface support (3), position dans laquelle le ou chaque produit (O) a une longueur initiale (Li) entre ses deux extrémités longitudinales,
- /b/ mise en contrainte par le ou les dispositifs de préhenseur-courbeur du ou des produits (O) dans une position courbée (PC), position dans laquelle le ou chaque produit (O) a une longueur réduite (Lr) entre ses deux extrémités longitudinales inférieure à la longueur initiale (Li), et,
- Ici dépose et insertion par le ou les dispositifs de préhenseur-courbeur du ou des produits (O) en position courbée (PC) dans ledit au moins un emballage (E).

2. Procédé selon la revendication 1, dans lequel ledit au moins un emballage (E) présente un fond et des rebords, et dans lequel la dépose en Ici est obtenue dans la position courbée (PC) du ou des produits (O) présentant la longueur réduite (Lr), en garantissant un décalage entre les extrémités longitudinales du ou de chaque produit (O) et les rebords en vis-à-vis des extrémités longitudinales au moins supérieur à une marge seuil (dm).

3. Procédé selon la revendication 2, dans lequel dans la longueur initiale (Li) le décalage entre les extrémités longitudinales du ou de chaque produit (O) et les rebords en vis-à-vis des extrémités longitudinales est inférieur à la marge seuil (dm).

4. Procédé selon l'une des revendications 1 à 3, dans lequel le ou chaque dispositif de préhenseur-courbeur comprend une ou plusieurs ventouses, et dans lequel la préhension en /a/ est obtenue par mise en contact de la ventouse avec le produit (O), et mise en dépression de la ou les ventouses et dans lequel la dépose en Ici est obtenue par arrêt de la dépression.

5. Procédé selon l'une des revendications 1 à 4, dans lequel la surface de support (3) est une bande convoyeuse, présentant en relief des logements, parallèles, recevant individuellement les produits (O) longilignes.

6. Procédé selon l'une des revendications précédentes dans lequel le ou les dispositifs de préhenseur-courbeur sont manipulés par un bras robotisé, et dans lequel le bras robotisé assure le déplacement du ou des produits (O) saisis par le ou les dispositifs de préhenseur-courbeur depuis la surface de support (3) en /a/, et jusqu'à la dépose en Ici.

7. Dispositif de préhenseur-courbeur (2) convenant pour la mise en oeuvre du procédé mécanisé de courbement et de chargement selon la revendication 1, comprenant :
- au moins une ventouse (22) comportant des soufflets flexibles, reliée à au moins un port de vide (23) permettant d'actionner l'aspiration de la ventouse (22), la ventouse (22) étant configurée pour saisir par aspiration dans une direction d'aspiration le produit (O) en position de repos (PR) durant l'étape /a/, et pour tirer par aspiration continue dans un sens de rétractation de la ventouse (22), affaissant les soufflets de la ventouse (22), durant l'étape /b/ en provoquant un déplacement du produit (O) par rapport à une partie fixe (20) du dispositif de préhenseur-courbeur (2), et,
- au moins une portion de contre-appui (21) inférieure comportant au moins une surface de contact (S), en particulier concave, configurée pour venir en contre-appui sur le produit (O) lors de la rétraction de la ventouse (22) dans un sens opposé au sens de rétractation de la ventouse (22) sur le produit (O) durant l'étape /b/, afin de le mettre en position courbée (PC).

8. Dispositif de préhenseur-courbeur (2) selon la revendication 7, dans lequel la partie fixe (20) comporte un système de réglage de l'écartement (rv) entre la ou les ventouses (22) et ladite au moins portion de contre appui (21) configuré pour autoriser le déplacement de la au moins une ventouse (22) selon au moins deux positions relatives, comprenant une première position dans laquelle la mise en contrainte du produit (O) sur la surface de contact (S) est faible, le produit (O) est peu courbé et sa longueur réduite (Lr) présente une première valeur, et une deuxième position dans laquelle la mise en contrainte du produit (O) sur la surface de contact (S) est forte, le produit (O) est très courbé et sa longueur réduite (Lr) présente une deuxième valeur, différente de la première valeur.

9. Dispositif de préhenseur-courbeur (2) convenant pour la mise en oeuvre du procédé mécanisé de courbement et de chargement selon la revendication 1, comprenant trois ventouses (22), deux ventouses latérales situées de part et d'autre d'une ventouse centrale, lesdites trois ventouses (22) comportant des soufflets flexibles et étant reliées chacune à au moins un port de vide (23) permettant d'actionner l'aspiration de chacune des trois ventouses (22),
dans lequel les trois ventouses (22) sont configurées pour saisir par aspiration dans une direction d'aspiration le produit (O) en position de repos (PR) durant l'étape /a/, et pour tirer par aspiration continue dans un sens de rétractation des trois ventouses (22), affaissant les soufflets des ventouses (22), durant l'étape /b/ en provoquant un déplacement du produit (O) par rapport à une partie fixe (20) du dispositif de préhenseur-courbeur (2),
et dans lequel ladite ventouse centrale est configurée pour se rétracter selon une amplitude de rétractation supérieure à une amplitude de rétractation desdites ventouses latérales lors de l'étape /b/, permettant de mettre le produit (O) en position courbée (PC).

10. Ensemble préhenseur modulaire (1) permettant la mise en oeuvre du procédé mécanisé de courbement et de chargement selon l'une des revendications 1 à 6, comprenant une armature principale (10) comprenant des rails principaux (103) et une pluralité de dispositifs de préhenseurs-courbeurs (2) selon l'une des revendications 7, 8 ou 9, montés parallèles entre eux les uns à la suite des autres en coulissement sur lesdits rails principaux (103), lesdits dispositifs de préhenseurs courbeur (2) regroupés en plusieurs groupes de préhenseurs (Gr), indépendants, en coulissement le long des rails principaux (103),
et dans lequel l'armature principale (10) est équipée d'au moins un actionneur (102) configuré pour faire coulisser la pluralité de préhenseurs (2) le long des rails principaux (103) :
- entre une position de prise (P1) dans laquelle les préhenseurs-courbeurs (2) desdits groupes de préhenseur (Gr) sont regroupés au centre (104) de l'armature principale (10) juxtaposés les uns à la suite des autres sur les rails principaux (103), et chacune des deux extrémités des rails principaux (103) est laissée libre selon un espacement d'extrémité (de), et
- une position de dépose (P2), dans laquelle les préhenseurs-courbeurs (2) des groupes de préhenseurs (Gr) sont disposés en une position espacée, lesdits groupes (Gr) étant séparés les uns des autres par un espacement de groupe (dg) et chacun des groupes (Gr) ayant une longueur de groupe (Lg).

11. Ensemble préhenseur, selon la revendication 10, lesdits dispositifs de préhenseur-courbeur (2) appartenant à un même groupe (Gr) parmi la pluralité de groupes (Gr), sont solidaires, deux à deux, par des tiges de liaison (101) amovibles, les tiges (101) s'engageant par deux extrémités de chaque tige dans deux logements (200) des dispositifs préhenseur-courbeur (2) par emboitement élastique.

12. Procédé mécanisé selon l'une des revendications 1 à 6 pour le courbement et le chargement d'une pluralité de produits (O) dans des emballages (E) de longueur (Lem), supérieure à la longueur de groupe (Lg), et de largeur d'emballage (Le), mettant en oeuvre l'ensemble préhenseur modulaire (1) selon l'une des revendications précédentes 10 ou 11, dans lequel l'ensemble préhenseur (1) est placé en position de prise (P1) préalablement à l'étape /a/, le procédé comprenant les étapes suivantes :
- /a/ préhension par la pluralité de préhenseurs (2) de la pluralité de produits (O) uniformément répartis et se déplaçant sur la surface de support (3) en position de repos (PR),
- /b/ mise en contrainte et courbement de la pluralité de produits (O) par la pluralité de préhenseurs (2) dans la position courbée (PC),
- Ici mise en place de l'ensemble préhenseur (1) en position de dépose (P2) dans laquelle la pluralité de préhenseurs (2) tenant la pluralité de produits (O) courbés est divisée en une pluralité de groupes (Gr), chaque groupe (Gr) étant de longueur de groupe (Lg), et,
- /d/ dépose et insertion de chacun des groupes (Gr) de produits (O) en position courbée (PC) dans chacun des emballages (E).

13. Procédé selon l'une des revendications 1 à 6 et 12, dans lequel les produits (O) sont des produits alimentaires, en particulier des saucisses.
